# EUROPEAN PATENT SPECIFICATION

(11) **EP 3 096 019 B1**
(45) Date of publication and mention of the grant of the patent: **02.06.2021**
(21) Application number: 16167227.4
(22) Date of filing: 27.04.2016
(51) Int. Cl.: F04D 13/06, F04D 29/047, F04D 29/06, F04D 29/22

(54) **CENTRIFUGAL PUMP**
ZENTRIFUGALPUMPE
POMPE CENTRIFUGE

(30) Priority: 20.05.2015 CN 201510259494
(43) Date of publication of application: 23.11.2016
(73) Proprietor: ZHEJIANG SANHUA AUTOMOTIVE COMPONENTS CO., LTD., Hangzhou, Zhejiang 310018 (CN)
(72) Inventor: Zhang, Junchao, Hangzhou Zhejiang 310018 (CN); Ye, Wei, Hangzhou Zhejiang 310018 (CN); Bao, Junfeng, Hangzhou Zhejiang 310018 (CN); Zhang, Rongrong, Hangzhou Zhejiang 310018 (CN)
(74) Representative: Epping - Hermann - Fischer

(56) References cited:
- EP-A1- 2 863 061
- DE-A1-102005 039 557
- GB-A- 909 510
- US-A1- 2013 039 784

## Description

### FIELD

This application relates to the technical field of automobiles, and particularly to a component and part of an automobile heat management system.

### BACKGROUND

In recent decades, automobile industry develops rapidly. With performances of automobiles developing towards a safer, more reliable, more stable, fully-automatic and intelligent, and environmental friendly and energy saving trend, electrically driven centrifugal pumps have gradually replaced the conventional mechanical centrifugal pumps, and are widely applied in automobile heat management or circulation systems. The electrically driven centrifugal pumps have advantages of having lower electromagnetic interference, high efficiency and environmental protection, stepless speed regulation, etc.. thus can well meet requirements of market.

The electrically driven centrifugal pump includes a stator assembly and a rotor assembly, the stator assembly and the rotor assembly are fully isolated by a partition, which avoids the issue of liquid leakage existing in the conventional motor type centrifugal pump. Currently, the rotor assembly of the electrically driven centrifugal pump includes an impeller and a rotor, and in a conventional design, the rotor assembly is an integrally formed part, i.e., the impeller and the rotor are formed by injection molding. The rotor assembly is formed by injection molding using a mixed material of a plastic material and a magnetic material or plastic material, and taking a shaft sleeve as a base member for the injection molding, thus the shaft sleeve is generally formed in advance. The shaft sleeve is generally arranged to be rotatable with respect to the shaft, and also is covered by the material of the impeller, therefore, the structure of the shaft sleeve influences the intendity of the connection of the shaft sleeve to the impeller.

In EP2863061A1, a pump includes an annular molded stator having a substrate mounted with a Hall element and that includes a rotor having an annular rotor unit rotatably housed in a cup-shaped partition component, with one end thereof in an axial direction facing the Hall element and the other end thereof in the axial direction provided with an impeller attachment unit to which an impeller is attached. The rotor unit includes a resin magnet, a sleeve bearing provided inside of the resin magnet, and a resin portion used for integrally molding the resin magnet and the sleeve bearing and constituting the impeller attachment unit.

### SUMMARY

An object of the present application is to provide a centrifugal pump, which includes a rotor assembly and a shaft, the rotor assembly includes an injection molded body and a shaft sleeve, the injection molded body comprises an impeller, the rotor assembly is injection molded taking the shaft sleeve as an injection molding insert, and the rotor assembly is rotatably supported on the shaft via the shaft sleeve, and the shaft sleeve is formed by injection molding, or forging, or forging and machining, or extruding and machining, or powder sintering, or machining. The shaft sleeve includes a body, a central hole is formed in the body of the shaft sleeve, and the body of the shaft sleeve includes an outer surface and an inner surface, and the inner surface encloses to form the central hole, and the shaft is arranged to pass through the central hole. The outer surface is fixed by injection molding to the injection molded body; the shaft sleeve further includes an impeller limiting portion, the impeller limiting portion is arranged on the outer surface of the shaft sleeve, includes protrusions distributed at intervals and protruding beyond the outer surface in a radial direction of the shaft sleeve, the impeller limiting portion is configured to limit a rotating movement and an axial movement of the shaft sleeve with respect to the injection molded body via the protrusions, and inner grooves are formed in the inner surface of the shaft sleeve and are formed by sinking from the inner surface of the shaft sleeve inwards the body of the shaft sleeve, the inner grooves are arranged at portions where the protrusions are arranged.

The centrifugal pump according to the present application includes the shaft sleeve, and the shaft sleeve includes the impeller limiting portion, which may limit the upward and downward movements and rotation of the injection molded body including the impeller with respect to the shaft sleeve, and improving a connection strength between the injection molded body and the shaft sleeve.

### BRIEF DESCRIPTION OF THE DRAWINGS

Figure 1 is a sectional schematic view showing the structure of an electrically driven pump according to an embodiment of the present application;
Figure 2 is a perspective schematic view showing the structure of a rotor assembly 12 of the electrically driven pump in Figure 1;
Figure 3 is a perspective schematic view showing the structure of a first embodiment of a shaft
sleeve 5 of the rotor assembly in Figure 2;
Figure 4 is a sectional schematic view showing the structure of the shaft sleeve 5 in Figure 3;
Figure 5 is a schematic view showing the structure of the shaft sleeve 5 in Figure 3 in an end face direction;
Figure 6 is a perspective schematic view showing the structure of a second embodiment of the shaft sleeve 5 of the rotor assembly in Figure 2;
Figure 7 is a perspective schematic view showing the structure of a third embodiment of the shaft sleeve 5 of the rotor assembly in Figure 2;
Figure 8 is a schematic view showing the structure of the shaft sleeve 5 in Figure 7 in an end face direction; and
Figure 9 is a sectional schematic view showing the structure of the shaft sleeve 5 in Figure 7.

### DETAILED DESCRIPTION

The present application is further described in conjunction with the drawings and embodiments. Centrifugal pumps include mechanical pump and electrically driven pump, and rotor assemblies of the mechanical pump and electrically driven pump may each include a shaft sleeve structure and an impeller structure, the shaft sleeve structures of the both may be the same, and the present application is described taking the electrically driven pump as an example.

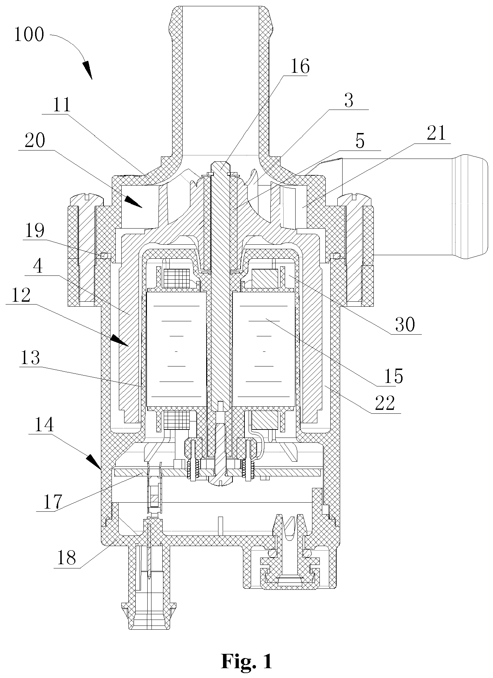

Figure 1 is a schematic view showing the structure of an electrically driven pump 100. The electrically driven pump 100 includes a first housing 11, a second housing 14, a rotor assembly 12, a stator assembly 15, a shaft 16, a printed circuit board 17, and an end cover 18. A pump inner cavity includes a space between the first housing 11 and the second housing 14, and between the second housing 14 and the end cover 18. The first housing 11 and the second housing 14 are fixedly connected, and a portion where the first housing 11 and the second housing 12 are connected is provided with an annular sealing ring 19. The electrically driven pump 100 is provided with a partition 13, and the pump inner cavity is separated by the partition 13 into a wet chamber 20 and a dry chamber 30. The wet chamber 20 may allow a working medium to pass through, and the rotor assembly 12 is arranged in the wet chamber 20. There is no working medium flowing through the dry chamber 30, and the stator assembly 15 and the printed circuit board 17 are arranged in the dry chamber 30. The stator assembly 15 is electrically connected to the printed circuit board 17 via leads, the printed circuit board 17 is connected to an external circuit via a plug. In this embodiment, the partition 13 and the second housing 14 are formed integrally by injection molding, and the second housing 14 and the partition 13 is formed by taking the shaft 16 as an injection molding insert. In this embodiment, the electrically driven pump 100 is an outer rotor type electrically driven pump, and the outer rotor type electrically driven pump is referred to as a pump in which the shaft 16 is taken as a central shaft, and a rotor 4 of the rotor assembly 12 is located at an outer periphery of the stator assembly 15, i.e., the stator assembly 15 is arranged more close to the shaft 16 than the rotor 4.

Referring to Figure 1, the rotor assembly 12 is arranged in the wet chamber 20. The rotor assembly 12 includes an impeller 3, a rotor 4, and a shaft sleeve 5. At least the rotor 4 includes a magnetic material, and the rotor 4 is substantially of a cylindrical shape. The impeller 3 is arranged at an upper end of the rotor 4, and is fixed to the rotor 4. The impeller 3 may include or not include the magnetic material. The wet chamber 20 includes an impeller cavity 21 and a rotor cavity 22, and the impeller cavity 21 is arranged to be in communication with the rotor cavity 22, i.e., is not isolated from the rotor cavity 22. The impeller 3 is arranged in the impeller cavity 21, the rotor 4 is arranged in the rotor cavity 22, and the rotor assembly 12 is sleeved on an outer surface of the shaft 16 by the shaft sleeve 5. An injection molded body including the impeller is formed by injection molding taking the shaft sleeve 5 as an insert, an impeller limiting portion is formed on an outer surface of the shaft sleeve 5, and the impeller limiting portion is configured to limit relative axial and rotating movements between the shaft sleeve and the injection molded body.

Different forming processes for the shaft sleeve 5 are chosen according to different materials or different structures of the shaft sleeve 5. For example, in the case that the shaft sleeve 5 adopts polyphenylenesulfide (PPS) and a fibrous material, the shaft sleeve 5 can be formed by injection molding. In the case that the shaft sleeve 5 adopts a ceramic material, the shaft sleeve 5 can be formed by powder sintering. In the case that the shaft sleeve 5 adopts a metal material, the shaft sleeve 5 can be formed by forging, or can be formed by forging and then by machining. And in the case that the shaft sleeve 5 adopts a polyester fiber, the shaft sleeve 5 can be formed by machining.

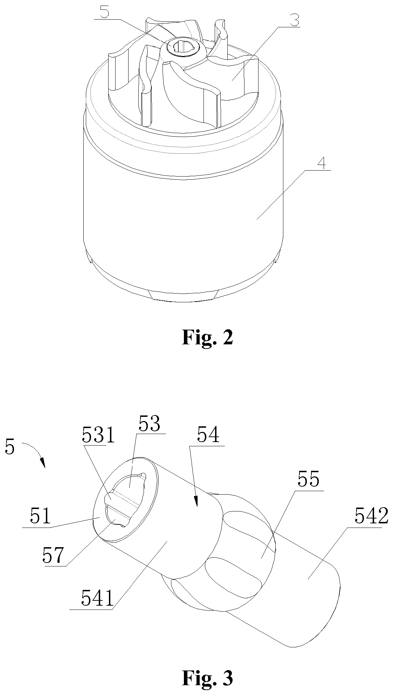

Figure 2 is a schematic view showing the structure of the rotor assembly 12, the rotor assembly 12 includes an impeller 3, a rotor 4 and a shaft sleeve 5. The impeller 3 and the rotor 4 in this embodiment are integrally arranged, and the rotor assembly 12 includes an injection molded body including the impeller 3 which is formed by injection molding adopting the mixture of a magnetic material and a plastic material and taking the shaft sleeve 5 as the injection molding insert. The rotor assembly 12 is formed as an integral by injection molding, thus has a compact structure, and a good product consistency. Of course, the impeller 3 and the rotor 4 may be separately formed, and may be fixedly connected by a fixing device, and in this case, the impeller 3 and the rotor 4 may respectively adopt different materials, the impeller 3 may adopt a common plastic material, and the injection molded body including the impeller 3 may be formed taking the shaft sleeve 5 as the injection molding insert, which may reduce the cost of materials. Also, in the case that the impeller 3 adopts the plastic material, rather than the magnetic material, the toughness of the impeller 3 may be improved, a blade of the impeller 3 can be made thin, and a hydraulic performance of the electrically driven pump may be improved. In addition, the same rotors 4 may be matched with different impellers 3, and different impellers 3 may change the hydraulic performance of the electrically driven pump 100, thus the expense of molds for the rotors may be reduced. Furthermore, the cylindricity and the wall thickness evenness of the rotor 4 separately formed by injection molding are also easily ensured.

Figures 3 to 5 are schematic views showing the structure of a first embodiment of the shaft sleeve 5 of the rotor assembly 12 in Figure 2. Figure 3 is a perspective schematic view showing the structure of the first embodiment of the shaft sleeve 5. In this embodiment, the shaft sleeve 5 is formed integrally by injection molding, and the injection molding material includes PPS and a fibrous material. Of course, the shaft sleeve 5 may adopt other materials and be formed by other processes, however, the structures are the same as the structure in this embodiment. The shaft sleeve 5 is of a hollow structure, which includes a body 51 of the shaft sleeve 5. A central hole 53 is formed in the body 51 of the shaft sleeve 5, the body 51 of the shaft sleeve 5 includes an outer surface 54 and an inner surface 57, and the inner surface 57 encloses to form the central hole 53. The shaft sleeve 5 is arranged to cooperate with an outer surface of the shaft 16 via the central hole 53, and the shaft sleeve 5 is fixed by injection molding to the injection molded body including the impeller 3 via the outer surface 54. The shaft sleeve 5 includes an impeller limiting portion and an inner groove 531. The impeller limiting portion includes a structure which may limit a rotating movement and an axial movement of the shaft sleeve 5 with respect to the injection molded body including the impeller 3. The inner grooves 531 are sunken inwards the body 51 of the shaft sleeve 5 and are distributed at regular intervals or uniformly distributed or symmetrically distributed in the circumferential direction of the inner surface. And an inner passage includes a certain clearance formed between the shaft 16 and the inner groove 531 of the shaft sleeve 5. When the electrically driven pump 100 works, the working medium may enter into the clearance between the shaft 16 and the shaft sleeve 5, thus may have a lubricating function, and also may cool contact surfaces of the shaft 16 and the shaft sleeve 5. The impeller limiting portion is at least one part of a portion where the shaft sleeve 5 fits the injection molded body including the impeller 3. The impeller limiting portion may be a protrusion or a groove portion formed on the outer surface of the shaft sleeve 5. The groove portion is defined only relative to the outer surface, and if the groove portion is taken as the outer surface, it also corresponds to a protrusion. The embodiment in which the impeller limiting portion is embodied as the protrusion is described as follows.

In this embodiment, the outer surface 54 includes a first reference surface, and the impeller limiting portion includes protrusions 55 arranged at intervals and protruding beyond the first reference surface of the outer surface 54 in a radial direction of the shaft sleeve 5. The protrusions 55 extend in an axial direction of the shaft sleeve 5. In this embodiment, the protrusions 55 are arranged at substantially same intervals or uniformly distributed in the circumferential direction of the outer surface 54, thus the shaft sleeve of injection molded, the shrinkage is relatively uniform, and the consistency of the shaft sleeve is relatively good. However, the shaft sleeves formed by other forming processes, the protrusions 55 extend in the axial direction of the shaft sleeve, and the protrusions 55 may be not uniformly distributed along the circumference direction of the shaft sleeve 5.

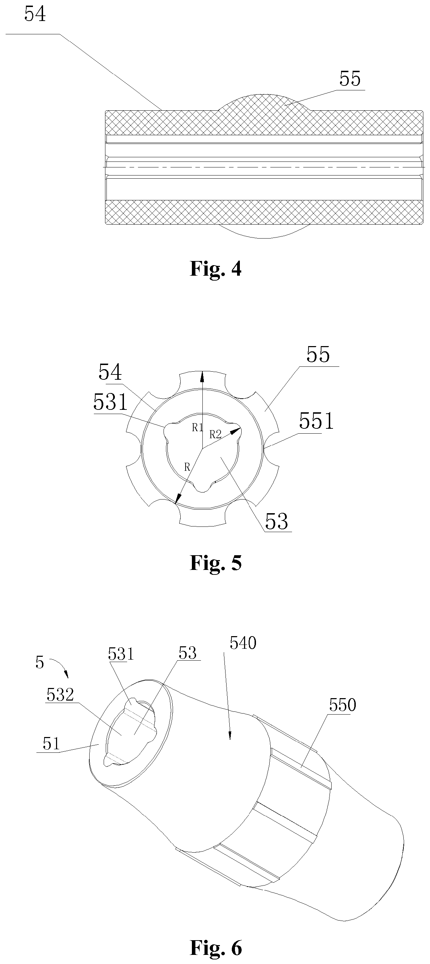

Reference is made to Figures 3 and 4, the outer surface 54 includes a first cylindrical surface 541, a second cylindrical surface 542, and protrusions 55. The first cylindrical surface 541 and the second cylindrical surface 542 are the first reference surface of the shaft sleeve 5 in this embodiment, and outer diameters of the first cylindrical surface 541 and the second cylindrical surface 542 are substantially the same. In the axial direction of the shaft sleeve 5, a length of the first cylindrical surface 541 is substantially the same as a length of the second cylindrical surface 542. The protrusions 55 are arranged between the first cylindrical surface 541 and the second cylindrical surface 542, and a maximum diameter of the protrusion 55 is greater than the outer diameter of the first cylindrical surface 541. A minimum diameter of the protrusion 55 is at least equal to the outer diameter of the first cylindrical surface 541. In a cross section passing through a central axis of the shaft sleeve 5 and an outer surface of the protrusion 55, the protrusion 55 is substantially of a circular-arc shape or a combination of the circular-arc shapes or includes at least a circular-arc shaped part. Since a length of the protrusion 55 is less than a length of the shaft sleeve 5, the protrusions 55 may limit the axial movement of the shaft sleeve 5 with respect to the injection molded body including the impeller 3. With the structure in this embodiment, the injection molded part including the impeller formed by injection molding can be easily released from the mold. A groove is formed between adjacent protrusions, thus the protrusions 55 may limit the rotation of the shaft sleeve 5 with respect to the injection molded body including the impeller. Of course, in the case that one part of the protrusion 55 has a height greater than another part of the protrusion 55, and the length of the protrusion is the same as the length of the shaft sleeve 5, the axial movement of the shaft sleeve with respect to the injection molded body including the impeller may also be limited.

An inner groove 531 is formed in the inner surface 57 of the shaft sleeve 5, and the inner grooves 531 are sunken inwards the body 51 of the shaft sleeve 5 and are distributed at regular intervals or uniformly distributed or symmetrically distributed in the circumferential direction of the inner surface. And the inner groove 531 is arranged to be in communication with the central hole 53. A depth of the inner groove 531 is less than one half of a thickness, of the thinnest portion of the body 51 of the shaft sleeve 5; and a width of the inner groove 531 is less than or equal to two times of the depth of the inner groove 531. The inner passage of the electrically driven pump 100 includes a certain clearance formed between the shaft 16 and the inner groove 531 of the shaft sleeve 5. When the electrically driven pump 100 works, the working medium may enter into the clearance between the shaft 16 and the shaft sleeve 5, thus may have a lubricating function, may also cool the contact surfaces of the shaft 16 and the shaft sleeve 5, and may ensure a service life of the shaft sleeve 5.

Figure 5 is a schematic view showing the structure of the shaft sleeve 5 in Figure 3 in an end surface direction, the first cylindrical surface 541 has an outer diameter R, the protrusion 55 has a maximum outer diameter R1, and the inner groove 531 has a maximum outer diameter R2. As can be seen from the drawing, a depth of the groove 551 between adjacent protrusions 55 is the same as a height of the protrusion 55 protruding beyond the first cylindrical surface 541 (a difference value between R and R1), and the depth of the inner groove 531 is slightly less than the protruding height of the protrusion 55. The inner grooves 531 and the grooves 551 are arranged at intervals, i.e., the inner groove 531 is arranged at the portion where the protrusion 55 is arranged, thus allowing thicknesses of the portions of the shaft sleeve 5 to be as uniform as possible, and facilitating reducing the unevenness of shrinkage caused during injection molding of the shaft sleeve 5. Also the number of the inner grooves 531 is less than the number of the protrusions 55, which may improve a strength and a forming precision of the shaft sleeve 5.

Figure 6 is a schematic view showing the structure of a second embodiment of the shaft sleeve 5 of the rotor assembly 12 in Figure 2. The shaft sleeve 5 is formed integrally by injection molding, the material for the injection molding includes PPS and a fibrous material. Of course, the shaft sleeve 5 may also adopt other materials, and the structure thereof is the same as the structure in this embodiment. The shaft sleeve 5 is of a hollow structure, which includes a body 51 of the shaft sleeve 5, and a central hole 53 is formed in the body 51 of the shaft sleeve 5. The body 51 of the shaft sleeve 5 includes an inner surface 532 and an outer surface 540, and the inner surface 532 encloses to form the central hole 53. The shaft sleeve 5 is arranged to cooperate with an outer surface of the shaft 16 via the central hole 53, and the shaft sleeve 5 is fixed by injection molding to the injection molded body including the impeller 3 via the outer surface 540. The shaft sleeve 5 includes an impeller limiting portion and an inner groove 531. The impeller limiting portion is arranged on the outer surface 540 of the shaft sleeve 5, and the inner groove 531 is arranged in the inner surface 532 of the shaft sleeve 5. The impeller limiting portion may be of a structure which may limit a rotating movement and an axial movement of the shaft sleeve 5 with respect to the injection molded body including the impeller 3. The inner grooves 531 are sunken inwards the body 51 of the shaft sleeve 5 and are distributed at regular intervals or uniformly distributed or symmetrically distributed in the circumferential direction of the inner surface. An inner passage includes a certain clearance formed between the shaft 16 and the inner groove of the shaft sleeve 5. When the electrically driven pump 100 operates, the working medium may enter into the clearance between the shaft 16 and the shaft sleeve 5, thus may function to lubricate, and also cool contact surfaces of the shaft 16 and the shaft sleeve 5. A main difference between the shaft sleeve of this embodiment and the shaft sleeve in the first embodiment is that, the impeller limiting portion includes protrusions 550 protruding beyond the outer surface 540, outer diameters of the protrusions 550 are substantially the same, the outer surface 540 is divided by the protrusions 550 into three parts, and the protrusions 550 are located at a middle part of the shaft sleeve 5, the protrusions 550 each have an outer diameter greater than outer diameters of other two parts. The other two parts of the outer surface 540 are both circular-arc surfaces, and the other two parts include circular-arc surfaces. And the circular-arc surfaces have outer diameters gradually increased from two ends of the shaft sleeve 5 to two ends of the protrusions 550 respectively.

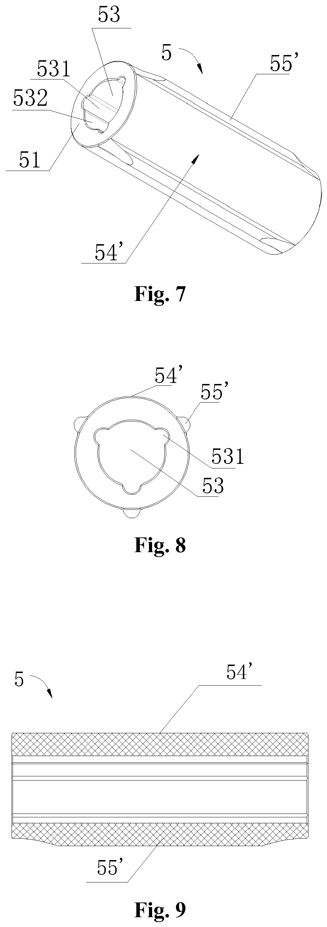

Figures 7 to 9 are schematic views showing the structure of a third embodiment of the shaft sleeve 5 of the rotor assembly 12 in Figure 2. In this embodiment, the shaft sleeve 5 is an injection molded part, and the material for the injection molding includes PPS and a fibrous material. Of course, the shaft sleeve 5 may also adopts other materials, and the structure thereof is the same as the structure in this embodiment. The shaft sleeve 5 is of a hollow structure, which includes a body 51, and a central hole 53 is formed in the body 51 of the shaft sleeve 5. The body of the shaft sleeve 5 includes an inner surface 532 and an outer surface 54', and the inner surface532 encloses to form the central hole 53. The shaft sleeve 5 is arranged to cooperate with the outer surface of the shaft 16 (referring to Figure 1) via the central hole 53, and the shaft sleeve 5 is fixed by injection molding to the injection molded body including the impeller via the outer surface 54'. The shaft sleeve 5 includes an impeller limiting portion, and the impeller limiting portion includes protruding ribs 55' protruding beyond the outer surface 54' and arranged at intervals. The body 51 of the shaft sleeve 5 includes inner grooves 531, the inner grooves 531 are sunken inwards the body 51 of the shaft sleeve 5 and are distributed at regular intervals or uniformly distributed or symmetrically distributed in the circumferential direction of the inner surface532. In this way, an inner passage includes a certain clearance formed between the shaft 16 and the shaft sleeve 5 at a portion where the inner groove 531 is arranged. Thus, in the case that the electrically driven pump 100 works, the working medium may enter into the clearance between the shaft 16 and the shaft sleeve 5, thus may have a lubricating effect, and may also cool contact surfaces of the shaft 16 and the shaft sleeve 5.

In this embodiment, the protruding ribs 55' extend in the axial direction of the shaft sleeve 5, and the lengths of the protruding ribs 55' are slightly less than the length of the shaft sleeve 5, or, the lengths of the protruding ribs 55' are the same as the length of the shaft sleeve and a cutting structure is formed close to two ends of the shaft sleeve 5. Thus, in the case that an injection molded body including the impeller 3 is formed taking the shaft sleeve 5 as an injection molding insert, a plastic coating layer may be well formed. The protruding ribs 55' protrude in radial directions of shaft sleeve, and the protruding ribs 55' are arranged at positions corresponding to positions of the inner grooves 531, also, a protruding height of each of the protruding ribs 55' is the same as a depth of each of the inner grooves 531, thus may ensure the thickness uniformity of the wall of the shaft sleeve 5, avoid the shrinkage unevenness of the shaft sleeve 5 caused during injection molding, and may improve the product yield of the injection molded member of the shaft sleeve 5. A number of the inner grooves 531 is three, and a number of the protruding ribs 55' is three, and the three protruding ribs 55' are arranged symmetrically in the circumferential direction of the shaft sleeve 5, which facilitates the dynamic balance of the shaft sleeve in rotating process. The protruding ribs 55' arranged in such a way may prevent a rotating movement and an axial movement of the injection molded body including the impeller 3 with respect to the shaft sleeve 5.

It should be noted that, the above embodiments are only intended to describe the present application, and should not be interpreted as a limitation to the technical solutions of the present application. Although the present application is described in detail in conjunction with the above embodiments, it should be understood by those skilled in the art that, modifications or equivalent substitutions may still be made to the present application by those skilled in the art; and any technical solutions and improvements thereof without departing from the scope of the present application also fall into the scope of the present application defined by the claims.

## Claims

1. A centrifugal pump (100), comprising a rotor assembly (12) and a shaft (16), wherein the rotor assembly (12) comprises an injection molded body and a shaft sleeve (5), the injection molded body comprises an impeller (3), the rotor assembly (12) is formed by injection molding taking the shaft sleeve (5) as an injection molding insert, and the rotor assembly (12) is rotatably supported on the shaft (16) via the shaft sleeve (5), wherein:
the shaft sleeve (5) is formed by injection molding, or forging, or forging and machining, or extruding and machining, or powder sintering, or machining;
the shaft sleeve (5) comprises a body (51), a central hole (53) is formed in the body (51) of the shaft sleeve (5), the body (51) of the shaft sleeve (5) comprises an outer surface (54) and an inner surface (57), the inner surface (57) encloses to form the central hole (53), the shaft (16) is arranged to pass through the central hole (53), and the outer surface (57) is fixed by injection molding to the injection molded body; and
the shaft sleeve (5) further comprises an impeller limiting portion, the impeller limiting portion is arranged on the outer surface (54) of the shaft sleeve (5), and comprises protrusions (55, 550, 55') distributed at intervals and protruding beyond the outer surface (54) in a radial direction of the shaft sleeve (5), and the impeller limiting portion is configured to limit a rotating movement and an axial movement of the shaft sleeve (5) with respect to the injection molded body via the protrusions(55, 550, 55');
and
inner grooves (531) are formed in the inner surface (57) of the shaft sleeve (5) and are formed by sinking from the inner surface (57) of the shaft sleeve (5) inwards the body (51) of the shaft sleeve (5), the inner grooves (531) are arranged at portions where the protrusions (55, 550, 55') are arranged.

2. The centrifugal pump according to claim 1, wherein the protrusions (55, 550) extend in an axial direction of the shaft sleeve (5), and lengths of the protrusions (55, 550) are less than or equal to a length of the shaft sleeve (5), or a height of one part of each of the protrusions (55, 550) protruding beyond the outer surface (54) is greater than a height of another part of the protrusion (55, 550).

3. The centrifugal pump according to claim 2, wherein the outer surface comprises a first cylindrical surface (541) and a second cylindrical surface (542), an outer diameter of the first cylindrical surface (541) is substantially the same as an outer diameter of the second cylindrical surface (542), each of the protrusions (55) is arranged between the first cylindrical surface (541) and the second cylindrical surface (542), and in a cross section passing through a central axis of the shaft sleeve (5) and the protrusion (55), each of the protrusions (55) comprises at least a circular-arc shaped part.

4. The centrifugal pump according to claim 2, wherein the outer diameters of the protrusions (550) are substantially the same, the outer surface (54) of the shaft sleeve (5) comprises three parts, the protrusions are located at a middle part of the shaft sleeve (5), each of the protrusions (550) has a maximum outer surface, the maximum outer surface forms a virtual circle, the virtual circle has an diameter greater than outer diameters of the other two parts of the outer surface (54), and along the axial direction of the shaft sleeve (5), the other two parts of the outer surface (54) have outer diameters gradually increased from two ends of the shaft sleeve (5) to a connection portion between the protrusions (550) and the other two parts.

5. The centrifugal pump according to claim 1, wherein the protrusions are protruding ribs (55') formed by protruding from the outer surface (54), and the protruding ribs (55') extend in an axial direction of the shaft sleeve (5), a width of each of the protruding ribs (55') is less than a distance between adjacent protruding ribs (55'), the protruding ribs (55') are arranged to form at least one segment in the axial direction of the shaft sleeve (5), and top portions of the protruding ribs (55') are located in the same cylindrical surface or the same truncated conical surface taking a central axis of the shaft sleeve (5) as a central line.

6. The centrifugal pump according to claim 5, wherein a length of each of the protruding ribs (55') is substantially the same as a length of the shaft sleeve (5), each of the protruding ribs (55') comprises portions close to two ends of the shaft sleeve (5) and a portion close to a middle portion of the shaft sleeve (5), and a height of each of the portions close to two ends of the shaft sleeve (5) protruding beyond the outer surface (54) is less than a height of the portion close to the middle portion of the shaft sleeve (5) protruding beyond the outer surface (54).

7. The centrifugal pump according to any one of claims 2 to 6, wherein at least two impeller limiting portions are provided in a circumferential direction of the outer surface (54) of the shaft sleeve (5), and the impeller limiting portions are distributed at equal intervals or uniformly distributed in the circumferential direction of the outer surface (54) of the shaft sleeve (5).

8. The centrifugal pump according to claim 1, wherein the outer surface of the shaft sleeve (5) is substantially a circumferential surface having the same diameter, at least one part of the outer surface (54) of the shaft sleeve (5) comprises a mesh structure or a granular structure which allows the at least one part of the cylindrical surface to be rough, and the impeller limiting portion comprises the at least one part of the cylindrical surface.

9. The centrifugal pump according to claim 7, wherein the centrifugal pump (100) comprises at least one inner passage, and the inner passage comprises clearances formed between the shaft (16) and the inner grooves (531) of the shaft sleeve (5).

10. The centrifugal pump according to claim 9, wherein the number of protruding ribs (55') is the same as the number of the inner grooves (531), the protruding ribs (55') are arranged corresponding to the inner grooves (531), and thicknesses of positions where the inner grooves (531) and the protruding ribs (55') are arranged, of the body (51) of the shaft sleeve (5) are substantially equal to thicknesses of positions where the inner grooves (531) and the protruding ribs (55') are not provided, of the body (51) of the shaft sleeve (5).

## Patentansprüche

1. Kreiselpumpe(100) mit einer Rotorbaugruppe (12) und einer Welle (16), wobei die Rotorbaugruppe (12) einen spritzgegossenen Körper und eine Wellenhülse (5) aufweist, der spritzgegossene Körper ein Laufrad (3) aufweist, die Rotorbaugruppe (12) durch Spritzgießen unter Verwendung der Wellenhülse (5) als Spritzgießeinsatz geformt ist, und die Rotorbaugruppe (12) über die Wellenhülse (5) drehbar auf der Welle (16) gelagert ist, wobei:
die Wellenhülse (5) durch Spritzgießen gebildet ist, oder durch Schmieden gebildet ist, oder durch Schmieden und Bearbeiten gebildet ist, oder durch Extrudieren und Bearbeiten gebildet ist, oder durch Pulversintern gebildet ist, oder durch Bearbeiten gebildet ist;
die Wellenhülse (5) einen Körper (51) aufweist, ein zentrales Loch (53) in dem Körper (51) der Wellenhülse (5) gebildet ist, der Körper (51) der Wellenhülse (5) eine Außenfläche (54) und eine Innenfläche (57) aufweist, die Innenfläche (57) umschließt, um das zentrale Loch (53) zu bilden, die Welle (16) so angeordnet ist, dass sie durch das zentrale Loch (53) hindurchgeht, und die Außenfläche (57) durch Spritzgießen an dem spritzgegossenen Körper befestigt ist; und
die Wellenhülse (5) ferner einen Laufradbegrenzungsabschnitt aufweist, wobei der Laufradbegrenzungsabschnitt an der Außenfläche (54) der Wellenhülse (5) angeordnet ist und Vorsprünge (55, 550, 55') aufweist, die in Abständen verteilt sind und über die Außenfläche (54) in einer radialen Richtung der Wellenhülse (5) hinausragen, und der Laufradbegrenzungsabschnitt so konfiguriert ist, dass er eine Drehbewegung und eine axiale Bewegung der Wellenhülse (5) in Bezug auf den spritzgegossenen Körper über die Vorsprünge (55, 550, 55') hinaus begrenzt; und
Innennuten (531) in der Innenfläche (57) der Wellenhülse (5) gebildet sind und durch Einsinken von der Innenfläche (57) der Wellenhülse (5) nach innen in den Körper (51) der Wellenhülse (5) gebildet sind, wobei die Innennuten (531) an Abschnitten angeordnet sind, an denen die Vorsprünge (55, 550, 55') angeordnet sind.

2. Kreiselpumpe nach Anspruch 1, wobei sich die Vorsprünge (55, 550) in einer axialen Richtung der Wellenhülse (5) erstrecken und die Längen der Vorsprünge (55, 550) kleiner oder gleich einer Länge der Wellenhülse (5) sind, oder eine Höhe eines Teils jedes der Vorsprünge (55, 550), der über die Außenfläche (54) hinausragt, größer als eine Höhe eines anderen Teils des Vorsprungs (55, 550) ist.

3. Kreiselpumpe nach Anspruch 2, wobei die Außenfläche eine erste zylindrische Fläche (541) und eine zweite zylindrische Fläche (542) aufweist, ein Außendurchmesser der ersten zylindrischen Fläche (541) im Wesentlichen gleich einem Außendurchmesser der zweiten zylindrischen Fläche (542) ist, jeder der Vorsprünge (55) zwischen der ersten zylindrischen Oberfläche (541) und der zweiten zylindrischen Oberfläche (542) angeordnet ist, und in einem Querschnitt, der durch eine Mittelachse der Wellenhülse (5) und des Vorsprungs (55) verläuft, jeder der Vorsprünge (55) mindestens einen kreisbogenförmigen Teil aufweist.

4. Kreiselpumpe nach Anspruch 2, wobei die Außendurchmesser der Vorsprünge (550) im Wesentlichen gleich sind, die Außenfläche (54) der Wellenhülse (5) drei Teile aufweist, die Vorsprünge an einem mittleren Teil der Wellenhülse (5) angeordnet sind, jeder der Vorsprünge (550) eine maximale Außenfläche aufweist, die maximale Außenfläche einen virtuellen Kreis bildet, der virtuelle Kreis einen Durchmesser hat, der größer ist als die Außendurchmesser der anderen beiden Teile der Außenfläche (54), und entlang der axialen Richtung der Wellenhülse (5) die anderen beiden Teile der Außenfläche (54) Außendurchmesser aufweisen, die von zwei Enden der Wellenhülse (5) zu einem Verbindungsabschnitt zwischen den Vorsprüngen (550) und den anderen beiden Teilen allmählich zunehmen.

5. Kreiselpumpe nach Anspruch 1, wobei die Vorsprünge vorstehende Rippen (55') sind, die durch Vorstehen von der Außenfläche (54) ausgebildet sind, und die vorstehenden Rippen (55') sich in einer axialen Richtung der Wellenhülse (5) erstrecken, eine Breite jeder der vorstehenden Rippen (55') geringer als ein Abstand zwischen benachbarten vorstehenden Rippen (55') ist, die vorstehenden Rippen (55') so angeordnet sind, dass sie mindestens ein Segment in der axialen Richtung der Wellenhülse (5) bilden, und obere Abschnitte der vorstehenden Rippen (55') in derselben zylindrischen Fläche oder derselben kegelstumpfförmigen Fläche angeordnet sind, die eine Mittelachse der Wellenhülse (5) als Mittellinie einnehmen.

6. Kreiselpumpe nach Anspruch 5, wobei eine Länge jeder der vorstehenden Rippen (55') im Wesentlichen gleich einer Länge der Wellenhülse (5) ist, jede der vorstehenden Rippen (55') Abschnitte nahe zweier Enden der Wellenhülse (5) und einen Abschnitt nahe einem mittleren Abschnitt der Wellenhülse (5) aufweist, und eine Höhe jedes der Abschnitte nahe zweier Enden der Wellenhülse (5), die über die Außenfläche (54) hinaus vorstehen, geringer ist als eine Höhe des Abschnitts nahe dem mittleren Abschnitt der Wellenhülse (5), der über die Außenfläche (54) hinaus vorsteht.

7. Kreiselpumpe nach einem der Ansprüche 2 bis 6, wobei mindestens zwei Laufradbegrenzungsabschnitte in einer Umfangsrichtung der Außenfläche (54) der Wellenhülse (5) vorgesehen sind, und die Laufradbegrenzungsabschnitte in gleichen Abständen verteilt sind oder gleichmäßig in der Umfangsrichtung der Außenfläche (54) der Wellenhülse (5) verteilt sind.

8. Kreiselpumpe nach Anspruch 1, wobei die Außenfläche der Wellenhülse (5) im Wesentlichen eine Umfangsfläche mit gleichem Durchmesser ist, mindestens ein Teil der Außenfläche (54) der Wellenhülse (5) eine Gitterstruktur oder eine körnige Struktur aufweist, die es ermöglicht, dass der mindestens eine Teil der zylindrischen Oberfläche rau ist, und der Laufradbegrenzungsabschnitt den mindestens einen Teil der zylindrischen Oberfläche aufweist.

9. Kreiselpumpe nach Anspruch 7, wobei die Kreiselpumpe (100) mindestens einen inneren Durchgang aufweist, und der innere Durchgang Zwischenräume aufweist, die zwischen der Welle (16) und den Innennuten (531) der Wellenhülse (5) gebildet sind.

10. Kreiselpumpe nach Anspruch 9, wobei die Anzahl der vorstehenden Rippen (55') gleich der Anzahl der Innennuten (531) ist, die vorstehenden Rippen (55') entsprechend den Innennuten (531) angeordnet sind, und die Dicken der Positionen, wo die Innennuten (531) und die vorspringenden Rippen (55') am Körper (51) der Wellenhülse (5) angeordnet sind, im Wesentlichen gleich den Dicken der Positionen sind, wo die Innennuten (531) und die vorspringenden Rippen (55') am Körper (51) der Wellenhülse (5) nicht vorgesehen sind.

## Revendications

1. Pompe centrifuge (100), comprenant un assemblage de rotor (12) et un arbre (16), dans laquelle l'assemblage de rotor (12) comprend un corps moulé par injection et un manchon d'arbre (5), le corps moulé par injection comprend une hélice (3), l'assemblage de rotor (12) est formé par moulage par injection en prenant le manchon d'arbre (5) comme insert de moulage par injection, et l'assemblage de rotor (12) est supporté de manière rotative sur l'arbre (16) via le manchon d'arbre (5), dans laquelle :
le manchon d'arbre (5) est formé par moulage par injection, ou par forgeage, ou par forgeage et par usinage, ou par extrusion et par usinage, ou par frittage de poudre, ou par usinage ;
le manchon d'arbre (5) comprend un corps (51), un trou central (53) est formé dans le corps (51) du manchon d'arbre (5), le corps (51) du manchon d'arbre (5) comprend une surface extérieure (54) et une surface intérieure (57), la surface intérieure (57) se referme pour former le trou central (53), l'arbre (16) est agencé pour passer à travers le trou central (53), et la surface extérieure (57) est fixée par moulage par injection au corps moulé par injection ; et
le manchon d'arbre (5) comprend en outre une partie de limitation d'hélice, la partie de limitation d'hélice est agencée sur la surface extérieure (54) du manchon d'arbre (5), et comprend des saillies (55, 550, 55') réparties par intervalles et faisant saillie au-delà de la surface extérieure (54) dans une direction radiale du manchon d'arbre (5), et la partie de limitation d'hélice est configurée pour limiter un mouvement de rotation et un mouvement axial du manchon d'arbre (5) par rapport au corps moulé par injection via les saillies (55, 550, 55') ; et
des fentes intérieures (531) sont formées dans la surface intérieure (57) du manchon d'arbre (5) et sont formées par renfoncement de la surface intérieure (57) du manchon d'arbre (5) vers l'intérieur du corps (51) du manchon d'arbre (5), les fentes intérieures (531) sont agencées sur des parties où les saillies (55, 550, 55') sont agencées.

2. Pompe centrifuge selon la revendication 1, dans laquelle les saillies (55, 550) s'étendent dans une direction axiale du manchon d'arbre (5), et les longueurs des saillies (55, 550) sont inférieures ou égales à une longueur du manchon d'arbre (5), ou à une hauteur d'une partie de chacune des saillies (55, 550) faisant saillie au-delà de la surface extérieure (54) est supérieure à une hauteur d'une autre partie de la saillie (55, 550).

3. Pompe centrifuge selon la revendication 2, dans laquelle la surface extérieure comprend une première surface cylindrique (541) et une seconde surface cylindrique (542), un diamètre extérieur de la première surface cylindrique (541) est sensiblement le même qu'un diamètre extérieur de la seconde surface cylindrique (542), chacune des saillies (55) est agencée entre la première surface cylindrique (541) et la seconde surface cylindrique (542), et dans une section transversale passant à travers un axe central du manchon d'arbre (5) et la saillie (55), chacune des saillies (55) comprend au moins une partie en forme d'arc circulaire.

4. Pompe centrifuge selon la revendication 2, dans laquelle les diamètres extérieurs des saillies (550) sont sensiblement les mêmes, la surface extérieure (54) du manchon d'arbre (5) comprend trois parties, les saillies sont situées à une partie centrale du manchon d'arbre (5), chacune des saillies (550) possède une surface extérieure maximale, la surface extérieure maximale forme un cercle virtuel, le cercle virtuel possède un diamètre supérieur aux diamètres extérieurs des deux autres parties de la surface extérieure (54), et le long de la direction axiale du manchon d'arbre (5), les deux autres parties de la surface extérieure (54) possèdent des diamètres extérieurs progressivement croissants à partir des deux extrémités du manchon d'arbre (5) jusqu'à une partie de connexion entre les saillies (550) et les deux autres parties.

5. Pompe centrifuge selon la revendication 1, dans laquelle les saillies sont des nervures saillantes (55') formées par saillie de la surface extérieure (54), et les nervures saillantes (55') s'étendent dans une direction axiale du manchon d'arbre (5), une largeur de chacune des nervures saillantes (55') est inférieure à une distance entre des nervures saillantes (55') adjacentes, les nervures saillantes (55') sont disposées de manière à former au moins un segment dans la direction axiale du manchon d'arbre (5), et les parties supérieures des nervures saillantes (55') sont situées dans la même surface cylindrique ou la même surface tronquée prenant un axe central du manchon d'arbre (5) comme ligne centrale.

6. Pompe centrifuge selon la revendication 5, dans laquelle une longueur de chacune des nervures saillantes (55') est sensiblement la même qu'une longueur du manchon d'arbre (5), chacune des nervures saillantes (55') comprend des parties proches des deux extrémités du manchon d'arbre (5) et une partie proche d'une partie centrale du manchon d'arbre (5), et une hauteur de chacune des parties proches des deux extrémités du manchon d'arbre (5) faisant saillie au-delà de la surface extérieure (54) est inférieure à une hauteur de la partie proche de la partie centrale du manchon d'arbre (5) faisant saillie au-delà de la surface extérieure (54).

7. Pompe centrifuge selon une quelconque des revendications 2 à 6, dans laquelle au moins deux parties de limitation d'hélice sont présentes dans une direction circonférentielle de la surface extérieure (54) du manchon d'arbre (5), et les parties de limitation d'hélice sont réparties à intervalles égaux ou uniformément réparties dans la direction circonférentielle de la surface extérieure (54) du manchon d'arbre (5).

8. Pompe centrifuge selon la revendication 1, dans laquelle la surface extérieure du manchon d'arbre (5) est sensiblement une surface circonférentielle possédant le même diamètre, au moins une partie de la surface extérieure (54) du manchon d'arbre (5) comprend une structure à mailles ou une structure granulaire qui permet à au moins l'une des parties de la surface cylindrique d'être rugueuse, et la partie de limitation d'hélice comprend au moins l'une des parties de la surface cylindrique.

9. Pompe centrifuge selon la revendication 7, dans laquelle la pompe centrifuge (100) comprend au moins un passage intérieur, et le passage intérieur comprend des dégagements formés entre l'arbre (16) et les rainures intérieures (531) du manchon d'arbre (5).

10. Pompe centrifuge selon la revendication 9, dans laquelle le nombre de nervures saillantes (55') est le même que le nombre de rainures intérieures (531), les nervures saillantes (55') sont agencées de manière correspondant aux rainures intérieures (531), et les épaisseurs des positions où les rainures intérieures (531) et les nervures saillantes (55') sont agencées, du corps (51) du manchon d'arbre (5) sont sensiblement égales aux épaisseurs des positions où les rainures intérieures (531) et les nervures saillantes (55') ne sont pas prévues, du corps (51) du manchon d'arbre (5).
